# EUROPEAN PATENT APPLICATION

(11) **EP 4 671 869 A1**
(43) Date of publication of application: **31.12.2025**
(21) Application number: 24202763.9
(22) Date of filing: 26.09.2024
(51) Int. Cl.: G03G 15/00, H04N 1/00, G03G 21/16

(54) **IMAGE FORMING APPARATUS AND IMAGE FORMING METHOD**

(30) Priority: 24.06.2024 JP 2024101538
(71) Applicant: Toshiba TEC Kabushiki Kaisha, Tokyo 141-8562 (JP)
(72) Inventor: Murakami, Kiyotaka, Tokyo, 141-8562 (JP)
(74) Representative: Bandpay & Greuter

(57) **Abstract**

According to one embodiment, an image forming apparatus includes a first conveyance driving unit, a second conveyance driving unit, an image forming unit, a tag communication unit, and a control unit. The first conveyance driving unit conveys a sheet in a first conveyance path for forming an image on a first surface of the sheet. The second conveyance driving unit conveys the sheet in a second conveyance path for forming an image on a second surface of the sheet. The image forming unit forms the image with respect to the sheet conveyed through the first conveyance path or the second conveyance path. The tag communication unit writes data or reads data to a wireless tag of the sheet located in the first conveyance path or the second conveyance path. The control unit reads the data from the wireless tag of the sheet after writing the data to the wireless tag, and determines whether or not the data was normally written to the wireless tag based on the read data.

## Description

### FIELD

Embodiments described herein relate generally to an image forming apparatus and an image forming method.

### BACKGROUND

There is a sheet provided with a wireless tag (RF (radio frequency) tag). There is an image forming apparatus capable of writing information into a wireless tag while forming an image on such a sheet. Some of these image forming apparatuses discharge the sheet provided with the wireless tag to a predetermined discharge destination if it is determined that the writing or reading was normally performed.

However, in such an image forming apparatus, processing cannot be normally performed on the wireless tag that is to be processed (written or read), and processing may be performed on other wireless tags that are not originally to be processed. For example, a wireless tag of a sheet that was already discharged to a discharge destination, or a wireless tag of a sheet that accumulated in a sheet feeding unit, may be mistakenly processed. Some of the image formation differences are checked by performing a reading process on the wireless tag after a writing process for whether or not the processing is normally performed. However, during this check, information was read from the wireless tag that was not to be processed by mistake, and it was possible that the writing process was erroneously determined to have been performed normally.

### DISCLOSURE OF INVENTION

To this end, there is provided an image forming apparatus according to claim 1. There is also provided an image forming method according to claim 12. There is also provided a computer program comprising instructions for causing a computer of an image forming apparatus to perform the method according to claim 15. Preferred embodiments are set out in the dependent claims.

### DESCRIPTION OF THE DRAWINGS

FIG. 1 is a schematic configuration diagram illustrating an example of an image forming apparatus 100 according to an embodiment;
FIG. 2 is a diagram illustrating a control system of the image forming apparatus 100;
FIG. 3 is a diagram illustrating a specific example of a flowchart showing processing contents;
FIG. 4 is a sequence chart illustrating a specific example of operation of the image forming apparatus 100 according to the present embodiment; and
FIG. 5 is a flowchart illustrating a flow of processing of the image forming apparatus 100 in a second modification.

### DETAILED DESCRIPTION

Embodiments of the present disclosure provide an image forming apparatus, an image forming method, and a computer program that enable to distinguish between a sheet that was normally processed and a sheet that was not normally processed among the sheets provided with a wireless tag with a higher accuracy.

In general, according to one embodiment, an image forming apparatus includes a first conveyance driving unit, a second conveyance driving unit, an image forming unit, a tag communication unit, and a control unit. The first conveyance driving unit conveys a sheet to be processed to which a wireless tag is assigned in a first conveyance path for forming an image on a first surface of the sheet. The second conveyance driving unit conveys the sheet in a second conveyance path for forming an image on a second surface of the sheet. The image forming unit forms the image with respect to the first surface of the sheet conveyed through the first conveyance path or the second surface of the sheet conveyed through the second conveyance path. The tag communication unit writes data or reads data to the wireless tag of the sheet located in the first conveyance path or the second conveyance path. The control unit reads the data from the wireless tag of the sheet after writing the data to the wireless tag of the sheet in the first conveyance path and determines whether or not the data was normally written to the wireless tag based on the read data.

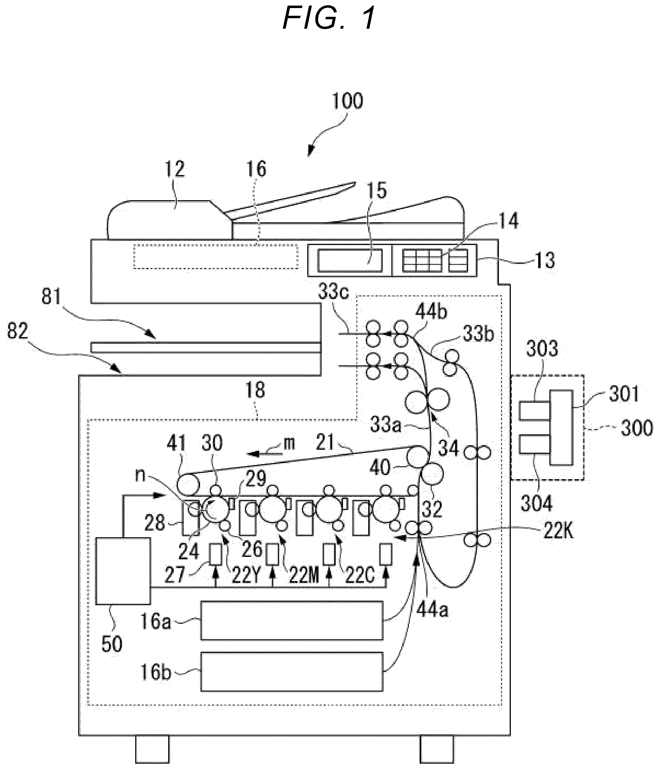

FIG. 1 is a schematic configuration diagram illustrating an example of an image forming apparatus 100 according to an embodiment. In the image forming apparatus 100 of the embodiment, an image system can also be provided for a sheet provided with a wireless tag. The image forming apparatus 100 is a multi-function peripheral (MFP), a printer, a copier, and the like.

In FIG. 1, a document table (not shown) is provided at the top of the image forming apparatus 100, and an automatic document feeder (ADF) 12 is provided on the document table so as to be freely opened and closed. In addition, a control panel 13 is provided on the top of the image forming apparatus 100. The control panel 13 includes an operation unit 14 including various keys and a touch panel type display unit 15. The display unit 15 is a specific example of an output unit that performs output in a form that is recognizable by a user. Instead of the display unit 15, an output unit of other modes that performs output in a form that is recognizable by the user may be provided in the image forming apparatus 100. For example, a speaker that outputs audio may be provided.

The image forming apparatus 100 includes a scanner unit 16. The scanner unit 16 reads a document transmitted by the ADF 12 or a document placed on the document table. The image forming apparatus 100 includes a wireless tag unit 300 and a printer unit 18 (corresponding to an image forming unit) . The printer unit 18 includes an image forming control unit 50 (corresponding to a control unit) and sheet feed cassettes 16a and 16b, and the like. The image forming control unit 50 controls the control panel 13, the wireless tag unit 300, and the printer unit 18. The image forming control unit 50 controls the conveyance of sheets in the printer unit 18. The wireless tag in the present embodiment is, for example, a Radio Frequency (RF) tag. The installation location of the wireless tag unit 300 illustrated in FIG. 1 is only one specific example. Unless specifically limited in the following description, the installation location of the wireless tag unit 300 need not be limited to a specific location as illustrated in FIG. 1.

The sheet feed cassette 16a stores a bundle of sheets. The sheet feed cassette 16a may store a bundle of sheets with a wireless tag (hereinafter referred to as "wireless tag sheet"). The sheet feed cassette 16a may store a bundle of sheets without a wireless tag (hereinafter referred to as "ordinary sheet"). The sheet feed cassette 16a stores sheets that are to be processed thereafter by the image forming apparatus 100. The sheet feed cassette 16b is also similarly configured to the sheet feed cassette 16a.

The printer unit 18 forms an image. For example, the printer unit 18 forms the image indicated by an image data. In the following description, forming an image is also expressed as printing. The printer unit 18 includes an intermediate transfer belt 21. The printer unit 18 supports the intermediate transfer belt 21 with a driven roller 41 and a backup roller 40, etc. The printer unit 18 rotates the intermediate transfer belt 21 in the direction of the arrow m.

The printer unit 18 includes four sets of image forming stations 22Y, 22M, 22C and 22K. The image forming stations 22Y, 22M, 22C, and 22K are instruments for forming images of Y (yellow), M (magenta), C (cyan), and K (black), respectively. The image forming stations 22Y, 22M, 22C and 22K are arranged on the underside of the intermediate transfer belt 21 along the direction of rotation of the intermediate transfer belt 21.

Hereinafter, among the respective image forming stations 22Y, 22M, 22C, and 22K, the image forming station 22Y of Y (yellow) will be described as an example. Note that since the image forming stations 22M, 22C and 22K are provided with the same configuration as the image forming station 22Y, detailed descriptions thereof will be omitted.

The image forming station 22Y includes a charging charger 26, an exposure scanning head 27, a developing device 28, and a photoconductor cleaner 29. The charging charger 26, the exposure scanning head 27, the developing device 28 and the photoconductor cleaner 29 are arranged around a photoconductor drum 24 rotating in the direction of the arrow n.

The image forming station 22Y includes a primary transfer roller 30. The primary transfer roller 30 faces the photoconductor drum 24 via the intermediate transfer belt 21. After charging the photoconductor drum 24 with the charging charger 26, the image forming station 22Y is exposed by the exposure scanning head 27. The image forming station 22Y forms an electrostatic latent image on the photoconductor drum 24. The developing device 28 uses a two-component developer formed by the toner and the carrier to develop the electrostatic latent image on the photoconductor drum 24.

The primary transfer roller 30 primarily transfers a toner image formed on the photoconductor drum 24 to the intermediate transfer belt 21. The image forming stations 22Y, 22M, 22C and 22K form a color toner image on the intermediate transfer belt 21 by the primary transfer roller 30. The color toner image is formed by sequentially superimposing toner images of Y (yellow), M (magenta), C (cyan), and K (black). The photoconductor cleaner 29 removes the toner remaining on the photoconductor drum 24 after the primary transfer.

The printer unit 18 includes a secondary transfer roller 32. The secondary transfer roller 32 faces the backup roller 40 across the intermediate transfer belt 21. The secondary transfer roller 32 collectively and secondarily transfers the color toner image on the intermediate transfer belt 21 to the sheet.

The image forming apparatus 100 includes conveyance paths 33a, 33b and 33c. Each conveyance path includes a space in which the sheet is conveyed, and a conveyance driving unit that moves the sheet within the conveyance path by rotation. The conveyance driving unit includes, for example, a conveyance roller that pinches and moves the sheets by rotation and a motor that rotates the conveyance roller (equivalent to a first conveyance driving unit and a second conveyance driving unit). The image forming control unit 50 controls the conveyance of sheets by controlling the rotation of the motor. The conveyance path 33a is a conveyance path (equivalent to a first conveyance path) from a confluence portion 44a to a branch portion 44b. The conveyance path 33b is a conveyance path (equivalent to a second conveyance path) for performing double-sided printing, and is a conveyance path from the branch portion 44b to the confluence portion 44a. The motor that rotates the conveyance roller provided in the conveyance path 33a is equivalent to the first conveyance driving unit. The motor that rotates the conveyance roller provided in the conveyance path 33b is equivalent to the second conveyance driving unit.

By conveying the sheet through the conveyance path 33b, the front and back of the sheet are inverted if passing through the conveyance path 33a. The conveyance path 33c is a conveyance path from the branch portion 44b to an upper discharge tray 81 or a lower discharge tray 82. The image forming apparatus 100 includes at least two discharge units (a first discharge unit and a second discharge unit). The first discharge unit is the discharge destination of the wireless tag sheet to which information was normally recorded in the wireless tag. The second discharge unit is the discharge destination of the wireless tag sheet to which information was not normally recorded in the wireless tag. In the present embodiment, the upper discharge tray 81 is a specific example of the first discharge unit, and the lower discharge tray 82 is a specific example of the second discharge unit.

The image forming control unit 50 has operation in the ordinary sheet mode and operation in the wireless tag sheet mode. When in the ordinary sheet mode, the image forming control unit 50 picks up a sheet to be processed from the sheet feed cassette 16a or 16b. At this time, it is desirable that the sheet to be picked up is an ordinary sheet, but the wireless tag sheet may be picked up. However, if the wireless tag sheet is used in the ordinary sheet mode, the effect of the wireless tag sheet mode cannot be obtained. The image forming control unit 50 conveys the picked-up sheet to the conveyance path 33a, and forms an image on the sheet by fixing the toner image by a fixing device 34. The image forming control unit 50 discharges the sheet by conveying the sheet in which the image is formed to the conveyance path 33c.

In the wireless tag sheet mode, the image forming control unit 50 picks up the wireless tag sheet to be processed from the sheet feed cassette 16a or 16b. The image forming control unit 50 conveys the picked-up wireless tag sheet to the conveyance path 33a. The image forming control unit 50 performs a writing process on the wireless tag sheet by the wireless tag unit 300. The image forming control unit 50 then performs a first reading process on the wireless tag sheet by the wireless tag unit 300. In the first reading process, a reading process of information from the wireless tag of the wireless tag sheet located in the conveyance path 33a is performed. The image forming control unit 50 forms an image on the wireless tag sheet by fixing the toner image by the fixing device 34. The image forming control unit 50 conveys the wireless tag sheet in which the image is formed to the conveyance path 33b, and performs a second reading process by the wireless tag unit 300 in the conveyance path 33b. In the second reading process, a reading process of information from the wireless tag of the wireless tag sheet located in the conveyance path 33b is performed.

The image forming control unit 50 determines the discharge destination according to the reading result of the first reading process and the second reading process. For example, the image forming control unit 50 may determine whether the information was normally recorded in the wireless tag sheet based on the reading result. For example, if the reading results of the first reading process and the second reading process match, it may be determined that the information was normally recorded. For example, if the reading results of the first reading process and the second reading process match, and the reading results match the information written in the writing process performed on the wireless tag (tag information), it may be determined that the information was normally recorded. For example, if the reading result of the first reading process matches the tag information, and the reading result of the second reading process matches the tag information, it may be determined that the information was normally recorded. For the wireless tag sheet in which it is determined that the information was normally recorded, the image forming control unit 50 determines the upper discharge tray 81 as the discharge destination. For the wireless tag sheet in which it is not determined that the information was normally recorded, the image forming control unit 50 determines the lower discharge tray 82 as the discharge destination. The image forming control unit 50 discharges the wireless tag sheet to the determined conveyance destination via the conveyance path 33a and the conveyance path 33c.

The wireless tag unit 300 includes a wireless tag unit control unit 301, a switching unit 302, a reading unit 303, and a writing unit 304. The wireless tag unit 300 is equivalent to the tag communication unit. The wireless tag unit 300 may be detachably configured from the image forming apparatus 100. The wireless tag unit 300 is in wireless communication with the wireless tag of the wireless tag sheet located in the conveyance path 33a or the conveyance path 33b.

The wireless tag unit control unit 301 includes a computing device and a storage device. The wireless tag unit control unit 301 controls the reading unit 303 and the writing unit 304. The wireless tag unit control unit 301 is also capable of communicating with the image forming control unit 50. The wireless tag unit control unit 301 can know in advance that the wireless tag sheet is located in the conveyance path 33a or the conveyance path 33b in response to a notification from the image forming control unit 50.

The reading unit 303 reads information from the wireless tag. Information read by the reading unit 303 (hereinafter referred to as "read information") is transmitted to the image forming control unit 50 by the wireless tag unit control unit 301. The writing unit 304 writes information (hereinafter also referred to as "tag information") into the wireless tag of the wireless tag sheet. The writing unit 304 writes tag information to the wireless tag, for example, according to the instructions of the image forming control unit 50. The writing unit 304 can disable the wireless tag or delete the information of the wireless tag.

Although the development method of the image forming apparatus 100 described above is a tandem development method, the method is not limited thereto, and the number of developing devices 28 is not limited thereto.

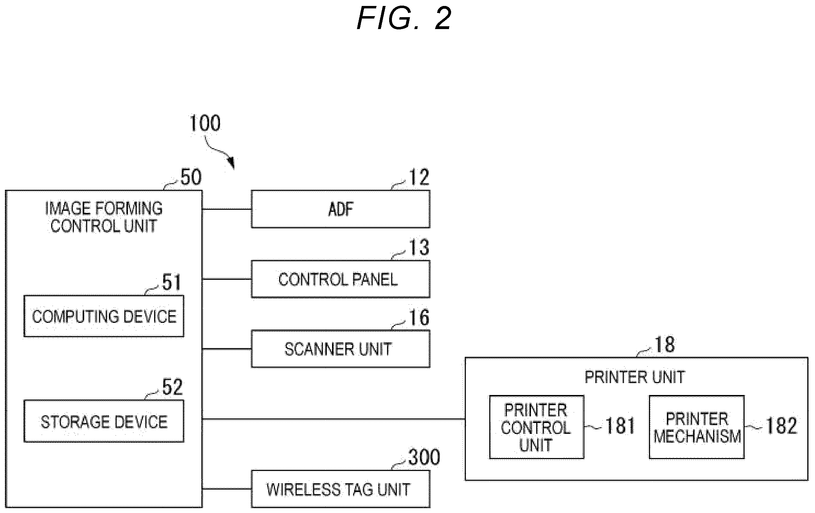

FIG. 2 is a diagram illustrating a control system of the image forming apparatus 100. In FIG. 2, the image forming control unit 50 includes a computing device 51 and a storage device 52. The computing device 51 controls the ADF 12, the control panel 13, the scanner unit 16, the printer unit 18, and the wireless tag unit 300 in accordance with various programs stored in the storage device 52. The printer unit 18 includes a printer control unit 181 and a printer mechanism 182. The printer control unit 181 controls the printer mechanism 182 in response to the instructions of the computing device 51 of the image forming control unit 50. The printer control unit 181 may be configured using, for example, firmware (specifically, an engine F/W, etc.). The printer mechanism 182 is an operating mechanism of the printer unit 18 described above and includes, for example, four sets of image forming stations 22Y, 22M, 22C and 22K, an intermediate transfer belt 21, a driven roller 41, and a backup roller 40.

The computing device 51 is, for example, a Central Processing Unit(CPU) and an Application Specific Integrated Circuit(ASIC) . The storage device 52 is a Read Only Memory (ROM), a Random Access Memory (RAM), and the like. Note that each of the ADF 12, the control panel 13, the scanner unit 16, the printer unit 18, and the wireless tag unit 300 may also be provided with a computing device and a storage device.

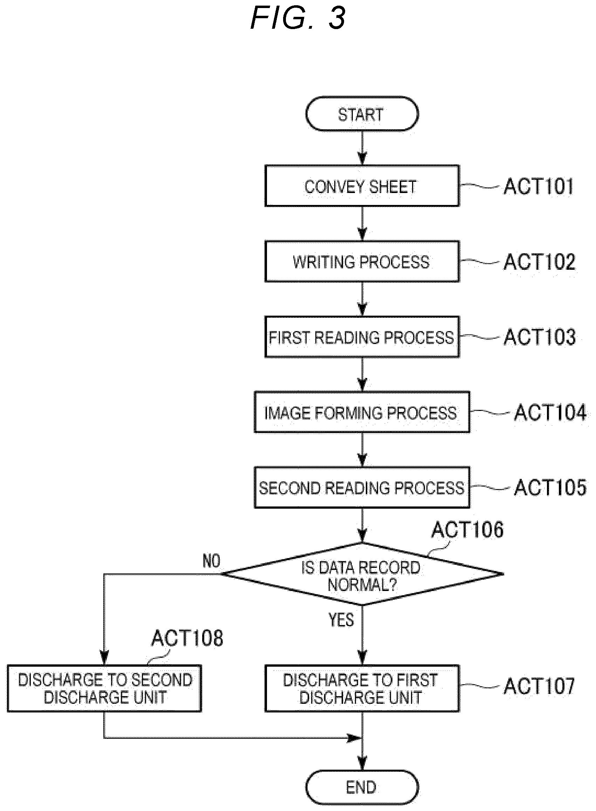

Next, the control content of the wireless tag sheet mode of the image forming control unit 50 and the wireless tag unit 300 will be described using the flowchart. FIG. 3 is a diagram illustrating a specific example of a flowchart showing processing contents. The image forming control unit 50 first picks up and conveys one wireless tag sheet from the bundle of wireless tag sheets to be processed (ACT 101) . For example, the bundle of wireless tag sheets to be processed is stored in the sheet feed cassette 16a or 16b. The pick-up of the wireless tag sheet from either of the sheet feed cassettes may be designated in advance by the user or may be preset in the image forming apparatus 100. The image forming control unit 50 conveys the picked-up wireless tag sheet to the conveyance path 33a. The image forming control unit 50 notifies the wireless tag unit 300 of the timing at which the wireless tag sheet to be processed is conveyed in the conveyance path 33a.

The wireless tag unit 300 writes the tag information in wireless communication to the wireless tag of the wireless tag sheet by operating the writing unit 304 at the timing when the wireless tag sheet is conveyed in the conveyance path 33a (ACT 102). Next, the wireless tag unit 300 operates the reading unit 303 to perform the first reading process in wireless communication with the wireless tag of the wireless tag sheet (ACT 103). Then, the image forming control unit 50 performs an image forming process on the wireless tag sheet to be processed (ACT 104). Next, the image forming control unit 50 conveys the wireless tag sheet to be processed to the conveyance path 33b. The wireless tag unit 300 performs the second reading process in wireless communication with the wireless tag of the wireless tag sheet located in the conveyance path 33b (ACT 105) .

The wireless tag unit 300 determines the discharge destination based on the result of the first reading process and the result of the second reading process. In the present embodiment, the discharge destination is determined based on whether predetermined conditions indicating that information was normally recorded in the wireless tag of the wireless tag sheet to be processed (hereinafter referred to as "normal recording condition") are satisfied. For example, if the reading results of the first reading process and the second reading process match, it may be determined that the normal recording conditions are satisfied. For example, if the reading results of the first reading process and the second reading process match, and the reading results match the information written in the writing process performed on the wireless tag (tag information), it may be determined that the normal recording conditions are satisfied. If the reading result of the first reading process matches the tag information, and the reading result of the second reading process matches the tag information, it may be determined that the normal recording conditions are satisfied. Note that the specific example of the normal recording conditions described above is merely one example. The normal recording condition may be defined as a different condition than described above.

If the normal recording condition is satisfied (ACT 106-YES), the image forming control unit 50 determines the first discharge unit (for example, the upper discharge tray 81) as the discharge destination (ACT 107). If the normal recording condition is not satisfied (ACT 106-NO), the image forming control unit 50 determines the second discharge unit (for example, the lower discharge tray 82) as the discharge destination (ACT 108).

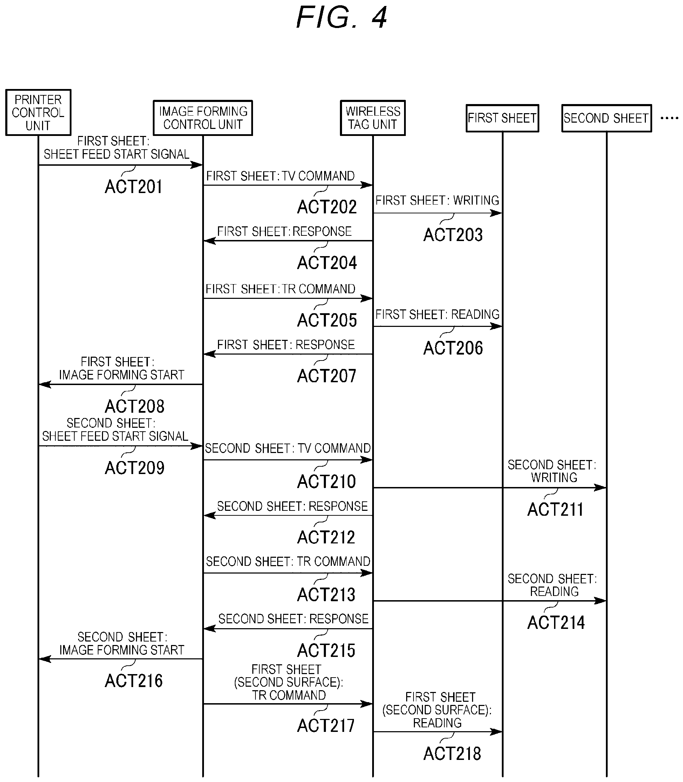

FIG. 4 is a sequence chart illustrating a specific example of operation of the image forming apparatus 100 according to the present embodiment. First, the printer control unit transmits a sheet feed start signal to the image forming control unit 50 for the first wireless tag sheet (ACT 201). The image forming control unit 50 transmits a TV command to the wireless tag unit 300 for the first wireless tag sheet in response to the sheet feed start signal (ACT 202) . The TV command is a signal for instructing the tag information to be written to the wireless tag. At this time, the image forming control unit 50 may designate the content of the tag information. The wireless tag unit 300 writes the tag information to the wireless tag of the first wireless tag sheet (first page) according to the TV command for the first sheet (ACT 203). When the writing process is completed, the wireless tag unit 300 transmits a response indicating that the writing process is completed to the image forming control unit 50 (ACT 204).

Next, the image forming control unit 50 transmits a TR command to the wireless tag unit 300 for the first wireless tag sheet (ACT 205). The TR command is a signal for instructing the information to be read from the wireless tag. The wireless tag unit 300 reads the information from the wireless tag of the first wireless tag sheet (first page) according to the TR command for the first sheet (ACT 206). After the reading process is completed, the wireless tag unit 300 transmits a response indicating that the reading process is completed to the image forming control unit 50 (ACT 207). The response may include the read information. The image forming control unit 50 transmits an instruction to the printer control unit to start image forming for the first sheet upon receiving the response for the reading process for the first sheet (ACT 208).

Next, the printer control unit transmits a sheet feed start signal to the image forming control unit 50 for the second wireless tag sheet (ACT 209). The image forming control unit 50 transmits a TV command to the wireless tag unit 300 for the second wireless tag sheet in response to the sheet feed start signal (ACT 210). The wireless tag unit 300 writes the tag information to the wireless tag of the second wireless tag sheet (second page) according to the TV command for the second sheet (ACT 211). When the writing process is completed, the wireless tag unit 300 transmits a response indicating that the writing process is completed to the image forming control unit 50 (ACT 212).

Next, the image forming control unit 50 transmits a TR command to the wireless tag unit 300 for the second wireless tag sheet (ACT 213). The wireless tag unit 300 reads the information from the wireless tag of the second wireless tag sheet (second page) according to the TR command for the second sheet (ACT 214). When the reading process is completed, the wireless tag unit 300 transmits a response indicating that the reading process is completed to the image forming control unit 50 (ACT 215). The image forming control unit 50 transmits an instruction to the printer control unit to start image forming for the second sheet upon receiving the response for the reading process for the second sheet (ACT 216).

The image forming control unit 50 transmits a TR command to the wireless tag unit 300 for the second surface of the first wireless tag sheet upon transmitting an instruction to start image forming for the second sheet (ACT 217). The wireless tag unit 300 reads the information from the wireless tag of the first wireless tag sheet (first page) according to the TR command for the second surface of the first sheet (ACT 218). When the reading process is completed, the wireless tag unit 300 transmits a response indicating that the reading process is completed to the image forming control unit 50.

According to the embodiment described above, the image forming control unit 50 performs the reading process twice for the wireless tag sheet to be processed. Then, based on the results of the first reading process and the second reading process, it is determined whether the recording of the tag data was performed normally. Therefore, it is possible to perform determination with a higher accuracy than if determination is made based on only the result of a single reading process.

In addition, according to the above-described embodiment, the location of the wireless tag sheet during the first reading process is performed (conveyance path 33a) and the location of the wireless tag sheet during the second reading process is performed (conveyance path 33b) are different. Therefore, it is possible to perform determination with a higher accuracy even if there is a case where an incorrect reading is performed due to a situation specific to the location.

In addition, if the installation location of the wireless tag unit 300 is a location that is physically close to the conveyance path 33b as illustrated in FIG. 1, it is more likely that the reading process is performed with higher accuracy if the wireless tag sheet is located in the conveyance path 33b. Therefore, by configuring the installation location of the wireless tag unit 300 in this manner, it is possible to perform determination with a higher accuracy than if determination is made based on only the reading result of the first reading process.

### (Modification)

In the image forming apparatus 100 operating as in FIG. 4, the image forming control unit 50 determines whether the normal recording condition is satisfied for each page for the plurality of wireless tag sheets that are processed continuously. The image forming control unit 50 may count up the number of wireless tag sheets to be processed if processing for a plurality of wireless tag sheets continuously. By being configured in this way, the image forming control unit 50 can determine how many wireless tag sheets are currently being processed from the first sheet. The image forming control unit 50 may display, on the display unit 15, information indicating that an error occurred and which wireless tag sheet the error occurred on if the wireless tag sheet in which the normal recording condition is not satisfied is generated. The information indicating the sheet number of such a wireless tag sheet is a specific example of information indicating the wireless tag sheet to be processed. As another aspect, information indicating the number of pages may be applied rather than information indicating the sheet number.

### (First Modification)

Next, a first modification of the image forming apparatus 100 will be described. In the first modification, the installation location of the wireless tag unit 300 is limited to a location that is physically close to the conveyance path 33b. The physically close location may be a location that is relatively closer in the physical distance than, for example, other conveyance paths (for example, the conveyance path 33a and the conveyance path 33c). The physically close location may be, for example, inside or outside of a wall surface closest to the conveyance path 33b among wall surfaces of the housing of the image forming apparatus 100. If the image forming control unit 50 performs the reading process (second reading process) performed during the wireless tag sheet is located in the conveyance path 33b, the image forming control unit 50 performs wireless communication with relatively weak wireless power compared to if the first reading process is performed.

By performing the processing in this way, in the first modification, if the second reading process is performed, the reading process is performed at a weaker wireless power than if the first reading process is performed. Therefore, if the second reading process is performed, the range which the wireless signal reaches is physically narrow, and the wireless signal is received only in an area that is physically closer to the wireless tag unit 300. As a result, there is a high possibility that the reading process can be performed on the wireless tag of the wireless tag sheet that is to be processed. Therefore, it is possible to perform determination more correctly by being configured as in the first modification.

### (Second Modification)

Next, a second modification of the image forming apparatus 100 will be described. In the second modification, the installation location of the wireless tag unit 300 is limited to a location that is physically close to the conveyance path 33b, as in the first modification. In addition, if the reading process (second reading process) is performed during the wireless tag sheet is located in the conveyance path 33b, wireless communication is performed with weak wireless power. The weak wireless power may be, for example, a wireless power that is relatively weaker than the wireless power that the wireless tag unit 300 uses to perform other reading processes. The weak wireless power may be, for example, a wireless power that is relatively weaker than the wireless power that the wireless tag unit 300 uses to perform the writing process. The weak wireless power may be power that is difficult to reach to the extent that the wireless signal used by the wireless tag unit 300 is sufficiently communicable to the location where other wireless tag sheets may be located, such as the conveyance path 33a, the upper discharge tray 81, the lower discharge tray 82, the sheet feed cassette 16a, and the sheet feed cassette 16b, and that is sufficiently communicable to the conveyance path 33b. The value of such power may be obtained and set by the analysis in advance.

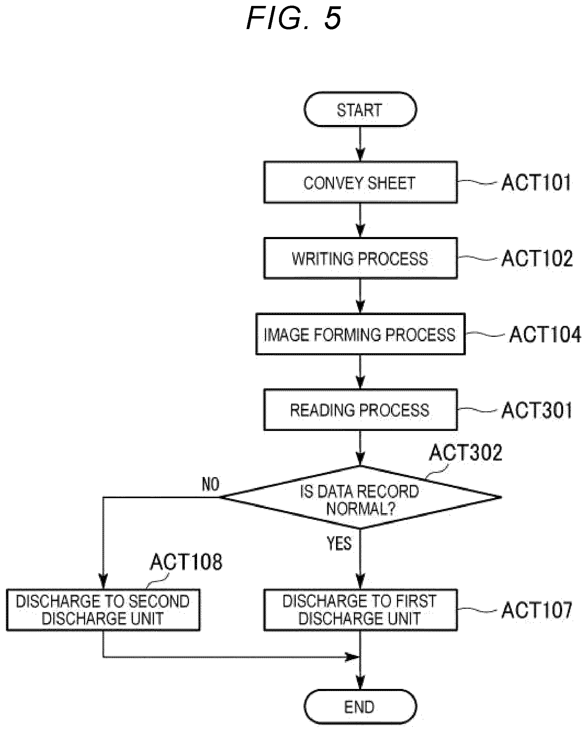

Furthermore, in the second modification, the first reading process is not performed. FIG. 5 is a flowchart illustrating a flow of processing of the image forming apparatus 100 in the second modification so configured. First, the process of ACT 101 and the process of ACT 102 are performed. Thereafter, the image forming process is performed without performing the process of ACT 103 (the first reading process) (ACT 104). Next, the image forming control unit 50 conveys the wireless tag sheet to be processed to the conveyance path 33b. The wireless tag unit 300 performs the reading process with the predetermined weak wireless power for the wireless tag of the wireless tag sheet located in the conveyance path 33b (ACT 301). For example, if the reading result of the reading process matches the information written in the writing process performed on the wireless tag (tag information), it may be determined that the normal recording conditions are satisfied. Note that the specific example of the normal recording conditions described above is merely one example. The normal recording condition may be defined as a different condition than described above.

If the normal recording condition is satisfied (ACT 302-YES), the image forming control unit 50 determines the first discharge unit (for example, the upper discharge tray 81) as the discharge destination (ACT 107). If the normal recording condition is not satisfied (ACT 302-NO), the image forming control unit 50 determines the second discharge unit (for example, the lower discharge tray 82) as the discharge destination (ACT 108).

By performing the processing in this way, in the second modification, if the reading process is performed for the wireless tag sheet located in the conveyance path 33b, the reading process is performed with the predetermined weak wireless power. Therefore, if the reading process is performed, the range which the wireless signal reaches is physically narrow, and the wireless signal is received only in an area that is physically closer to the wireless tag unit 300. As a result, there is a high possibility that the reading process can be performed on the wireless tag of the wireless tag sheet that is to be processed. Therefore, it is possible to perform determination more correctly by being configured as in the second modification. Furthermore, in the second modification, the process corresponding to the first reading process described above is not performed. As a result, the processing is accelerated.

The function of the image forming control unit 50 in the above-described embodiment may be achieved by a computer. In that case, the program for achieving this function may be recorded in a computer-readable recording medium, and the program recorded in the recording medium may be read into the computer system and executed. Note that the term "computer system" here includes OS and hardware such as peripheral devices. In addition, "computer-readable recording medium" refers to portable media such as a flexible disk, a magneto-optical disk, ROM, CD-ROM, and a storage device such as a hard disk built into the computer system. Furthermore, the term "computer-readable recording medium" may include one that dynamically stores the program for a short period of time, such as a communication line if transmitting the program over a network such as the Internet or a communication line such as a telephone line, and one that stores the program for a certain period of time, such as a volatile memory inside the computer system that becomes the server or the client in that case. The above-described program may be for achieving some of the above-described functions, and furthermore, the above-described functions may be achieved in combination with the program already recorded in the computer system.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the disclosure. The accompanying claims are intended to cover such forms or modifications as would fall within the scope of the disclosure.

The appendix according to the above-described embodiments is disclosed below.

### (Appendix 1)

An image forming apparatus including:
a first conveyance driving unit that conveys a sheet to be processed to which a wireless tag is attached in a first conveyance path for forming an image on a first surface of the sheet;
a second conveyance driving unit that conveys the sheet in a second conveyance path for forming an image on a second surface of the sheet;
an image forming unit that forms the image with respect to the first surface of the sheet conveyed through the first conveyance path or the second surface of the sheet conveyed through the second conveyance path;
a tag communication unit that writes data or reads data with respect to the wireless tag of the sheet located in the first conveyance path or the second conveyance path; and
a control unit that reads the data from the wireless tag of the sheet after writing the data to the wireless tag of the sheet in the first conveyance path and determines whether or not the data was normally written to the wireless tag based on the read data.

### (Appendix 2)

The image forming apparatus according to Appendix 1, wherein the control unit reads the data from the wireless tag of the sheet located in the first conveyance path after writing the data to the wireless tag of the sheet in the first conveyance path, and then reads the data from the wireless tag of the sheet located in the second conveyance path, and determines whether or not the data was normally written to the wireless tag based on the data read in the first conveyance path and the data read in the second conveyance path.

### (Appendix 3)

The image forming apparatus according to Appendix 1, wherein the tag communication unit is installed at a location relatively close to the second conveyance path, which is an area where the sheet to which the wireless tag is attached may be located and which is different from the second conveyance path.

### (Appendix 4)

The image forming apparatus according to Appendix 3, wherein the tag communication unit is installed at a location relatively close to the second conveyance path than a sheet feed cassette and a discharge unit to which the sheet is accumulated.

### (Appendix 5)

The image forming apparatus according to Appendix 3, wherein the tag communication unit is installed at a location relatively close to the second conveyance path than the first conveyance path.

### (Appendix 6)

The image forming apparatus according to Appendix 3, wherein the tag communication unit uses a relatively low wireless power compared to the wireless power used in other processing if reading data from the wireless tag of the sheet located in the second conveyance path.

### (Appendix 7)

The image forming apparatus according to Appendix 1, wherein the control unit performs control so that the sheet for which it is determined that the data was normally written is discharged from the first discharge unit and the sheet for which it is determined that the data was not normally written is discharged from the second discharge unit.

### (Appendix 8)

The image forming apparatus according to Appendix 1, further including:
an output unit that outputs information in a manner that is recognizable by a user, wherein
the control unit outputs, from the output unit, information indicating the sheet to be processed to which the wireless tag is attached if it is determined that the data was not normally written to the wireless tag if a plurality of the sheets was processed continuously.

### (Appendix 9)

An image forming method by an image forming apparatus including: a first conveyance driving unit that conveys a sheet to be processed to which a wireless tag is attached in a first conveyance path for forming an image on a first surface of the sheet; a second conveyance driving unit that conveys the sheet in a second conveyance path for forming an image on a second surface of the sheet; an image forming unit that forms the image with respect to the first surface of the sheet conveyed through the first conveyance path or the second surface of the sheet conveyed through the second conveyance path; and a tag communication unit that writes data or reads data with respect to the wireless tag of the sheet that is located in the first conveyance path or the second conveyance path, the method comprising:
writing the data to the wireless tag of the sheet in the first conveyance path;
reading the data from the wireless tag of the sheet; and
determining whether or not the data was normally written to the wireless tag based on the read data.

### (Appendix 10)

A computer program for causing a computer of an image forming apparatus to execute
a process of writing data to a wireless tag of a sheet in a first conveyance path;
a process of reading data from the wireless tag of the sheet; and
a process for determining whether or not the data was normally written to the wireless tag based on the read data,
the image forming apparatus including a first conveyance driving unit that conveys the sheet to be processed to which the wireless tag is attached in the first conveyance path for forming an image on a first surface of the sheet, a second conveyance driving unit that conveys the sheet in a second conveyance path for forming an image on a second surface of the sheet, an image forming unit that forms the image with respect to the first surface of the sheet conveyed through the first conveyance path or the second surface of the sheet conveyed through the second conveyance path, and a tag communication unit that writes data or reads data with respect to the wireless tag of the sheet that is located in the first conveyance path or the second conveyance path.

## Claims

1. An image forming apparatus comprising:
a first conveyance driving unit configured to convey a sheet to be processed to which a wireless tag is attached in a first conveyance path for forming an image on a first surface of the sheet;
a second conveyance driving unit configured to convey the sheet in a second conveyance path for forming an image on a second surface of the sheet;
an image forming unit (18) configured to form the image with respect to the first surface of the sheet conveyed through the first conveyance path or the second surface of the sheet conveyed through the second conveyance path;
a tag communication unit (300) configured to write data or read data with respect to the wireless tag of the sheet located in the first conveyance path or the second conveyance path; and
a control unit (50) configured to read the data from the wireless tag of the sheet after writing the data to the wireless tag of the sheet in the first conveyance path and to determine whether or not the data was normally written to the wireless tag based on the read data.

2. The apparatus according to claim 1, wherein
the control unit reads the data from the wireless tag of the sheet located in the first conveyance path after writing the data to the wireless tag of the sheet in the first conveyance path, and then reads the data from the wireless tag of the sheet located in the second conveyance path, and determines whether or not the data was normally written to the wireless tag based on the data read in the first conveyance path and the data read in the second conveyance path.

3. The apparatus according to claim 1 or 2, wherein
the tag communication unit is installed in a location relatively closer to the second conveyance path than an area in which the sheet to which the wireless tag is attached may be located and which is different from the second conveyance path.

4. The apparatus according to claim 3, wherein the tag communication unit is installed at a location relatively closer to the second conveyance path than a sheet feed cassette and a discharge unit to which the sheet is accumulated.

5. The apparatus according to claim 3 or 4, wherein the tag communication unit is installed at a location relatively closer to the second conveyance path than the first conveyance path.

6. The apparatus according to any one of claims 3 to 5, wherein the tag communication unit uses a relatively low wireless power compared to the wireless power used in other processing if reading data from the wireless tag of the sheet located in the second conveyance path.

7. The apparatus according to any one of claims 1 to 6, wherein the control unit performs control so that the sheet for which it is determined that the data was normally written is discharged from the first discharge unit and the sheet for which it is determined that the data was not normally written is discharged from the second discharge unit.

8. The apparatus according to any one of claims 1 to 7, further comprising:
an output unit (15) configured to output information in a manner that is recognizable by a user, wherein
the control unit outputs, from the output unit, information indicating the sheet to be processed to which the wireless tag is attached if it is determined that the data was not normally written to the wireless tag if a plurality of the sheets was processed continuously.

9. The apparatus according to any one of claims 1 to 8, wherein the tag communication unit comprises a reading unit (303) configured to read information from the wireless tag.

10. The apparatus according to any one of claims 1 to 9, wherein the tag communication unit comprises a writing unit (304) configured to write information into the wireless tag.

11. The apparatus according to any one of claims 1 to 10, wherein the control unit comprises a computing device (51) and a storage device (52).

12. An image forming method by an image forming apparatus including: a first conveyance driving unit configured to convey a sheet to be processed to which a wireless tag is attached in a first conveyance path for forming an image on a first surface of the sheet; a second conveyance driving unit configured to convey the sheet in a second conveyance path for forming an image on a second surface of the sheet; an image forming unit configured to form the image with respect to the first surface of the sheet conveyed through the first conveyance path or the second surface of the sheet conveyed through the second conveyance path; and a tag communication unit configured to write data or read data with respect to the wireless tag of the sheet that is located in the first conveyance path or the second conveyance path, the method comprising:
writing the data to the wireless tag of the sheet in the first conveyance path;
reading the data from the wireless tag of the sheet; and
determining whether or not the data was normally written to the wireless tag based on the read data.

13. The method of claim 12, further comprising:
reading the data from the wireless tag of the sheet located in the first conveyance path after writing the data to the wireless tag of the sheet in the first conveyance path;
reading the data from the wireless tag of the sheet located in the second conveyance path; and
determining whether or not the data was normally written to the wireless tag based on the data read in the first conveyance path and the data read in the second conveyance path.

14. The method of claim 13, wherein the location of the sheet during the step of reading the data from the wireless tag of the sheet located in the first conveyance path and the location of the sheet during the step of reading the data from the wireless tag of the sheet located in the second conveyance path are different.

15. A computer program comprising instructions for causing a computer of an image forming apparatus to perform the method of any one of claims 12 to 14.
